# EUROPEAN PATENT SPECIFICATION

(11) **EP 3 761 659 B1**
(45) Date of publication and mention of the grant of the patent: **01.11.2023**
(21) Application number: 20183880.2
(22) Date of filing: 03.07.2020
(51) Int. Cl.: H04Q 9/00, G01D 4/00, H04W 52/02, G01R 31/382

(54) **WIRELESS DEVICE AND COMMUNICATIONS SYSTEM**
DRAHTLOSE VORRICHTUNG UND KOMMUNIKATIONSSYSTEM
DISPOSITIF SANS FIL ET SYSTÈME DE COMMUNICATION

(30) Priority: 05.07.2019 JP 2019125989
(43) Date of publication of application: 06.01.2021
(73) Proprietor: Panasonic Intellectual Property Management Co., Ltd., Osaka-shi, Osaka 540-6207 (JP)
(72) Inventor: WATANABE, Takashi, Osaka, Nara 540-6207 (JP); KAMIMURA, Takanori, Osaka, Nara 540-6207 (JP)
(74) Representative: SSM Sandmair

(56) References cited:
- WO-A1-2018/202325
- US-A1- 2018 295 583

## Description

### BACKGROUND

### 1. Technical Field

The present disclosure relates to a communication device that communicates with a host apparatus, and to a communication system that includes a center device.

### 2. Description of the Related Art

A wireless automatic meter reading system has been put into practical use. This system automatically reads, by using wireless communication or the like, a meter reading value of a meter provided to measure an amount consumed in utilities such as gas, electric power, and water.

This type of wireless automatic meter reading system is constituted by a wireless terminal attached to a meter and receiving a meter reading value from the meter, a host terminal which transmits the meter reading value obtained from the wireless terminal to a center system of a utility company, and other parts. The wireless terminal in a certain mode may be a wireless unit built in a meter.

Various communication methods may be adopted for the system, such as a specific low-power wireless method that uses a license-free frequency band, and a method that uses cellular communication operated by telecommunications carriers handling cellular phones and the like in bands secured for the carriers.

Use of the specific low-power wireless method which uses a license-free band reduces communication line cost, but requires hard work for construction and maintenance operation associated with a network.

Meanwhile, some telecommunications carriers in recent years provide a cellular method suitable for a sensor network. This method incurs communication line cost, but offers such an advantageous effect, in view of construction of a sensor network, that construction and maintenance operation for the network are carried out by the telecommunications carriers under certain conditions.

However, a wireless terminal using cellular communication needs to be connected to a base station or the like. In this case, current consumption is likely to increase.

In particular, a wireless terminal used for automatic meter reading purposes associated with gas or water often uses a battery as a power source as disclosed in Unexamined Japanese Patent Publication No. 2004-153695. In this case, reduction of current consumption is extremely and increasingly important. For example, there is such a method which determines whether to allow transmission from a terminal in accordance with a communication environment, and transmits data in a preferable environment, or accumulates data in an unpreferable environment to reduce power consumption.

US 2018/0295583 A1 discloses techniques for managing battery-powered devices in a cellular network which include adjustment of a reporting schedule for lengthening the battery life by reducing the reporting frequency.

### SUMMARY

However, the conventional method causes such problems that date and time for data transmission cannot be specified, and that transmission is difficult to complete unless a communication environment improves. Moreover, some problems are difficult to handle by the cellular communication.

Specifically, according to the cellular communication, a communication status is determined between a base station and wireless terminals, and transmission power between the terminals and a number of times of retransmission are changed according to the communication status to ensure reliability of communication. Accordingly, even in a communication allowable state, current consumption increases, and reduction of current consumption is difficult to achieve.

In addition, a wireless terminal for automatic meter reading is installed together with a meter, and therefore becomes a fixed station provided at a fixed position. In this case, once the communication environment at an installation location deteriorates, this situation often continues without improvement. Accordingly, the conventional method has a limitation that data is supplied to the center system only after improvement of the communication environment.

The present disclosure solves the conventional problems, and changes a communication frequency and a volume of data for communication in accordance with a remaining amount of a battery that is a power supply of a wireless terminal to reduce current consumption. In this manner, operation of communication using not a mobile station but a fixed station is achievable while reducing current consumption even in a case of use of cellular communication.

To solve the conventional problems, a wireless device according to the present disclosure includes: a communication unit that communicates with a host apparatus; a controller that controls the communication unit; a storage unit that records data obtained from an external device; a battery that is a power source; and a battery remaining amount calculation unit that calculates a battery remaining amount of the battery based on a communication status with the host apparatus. The controller changes at least one of (i) a frequency of transmission and (ii) a volume of data to be transmitted in accordance with the battery remaining amount calculated by the battery remaining amount calculation unit.

In addition, a communication system of the present disclosure includes a wireless device that includes a storage unit that stores data from an external device and communication specifications defining communication with a host apparatus, a communication unit that communicates with the host apparatus, a battery that is a power source, a battery remaining amount calculation unit that calculates a battery remaining amount of the battery based on a communication status with the host apparatus, and a controller that controls the communication unit in accordance with the communication specifications stored in the storage unit. The communication system further includes the host apparatus that includes a host communication unit that communicates with the wireless device, and a communication interface unit that communicates with a center device. The communication system further includes the center device that includes a center communication unit that communicates with the host apparatus, and a communication specification data generation unit. The center device generates communication specification data for changing the communication specifications of the wireless device based on the battery remaining amount obtained from the wireless device.

According to the wireless device and the communication system of the present disclosure, the communication frequency and the volume of data for communication are changed in accordance with the battery remaining amount of the battery that is the power source of the wireless device to reduce current consumption. Accordingly, even in a case of use of cellular communication, current consumption can be reduced, and operation can be achieved for a demanded period without battery replacement.

### BRIEF DESCRIPTION OF THE DRAWINGS

FIG. 1 is a block diagram showing a configuration of a wireless device according to a first exemplary embodiment;
FIG. 2 is a flowchart explaining an operation of the wireless device according to the first exemplary embodiment;
FIG. 3 is a graph explaining a relationship between a battery remaining amount and a battery life in the first exemplary embodiment;
FIG. 4 is a block diagram showing a configuration of a communication system according to a second exemplary embodiment;
FIG. 5 is a communication sequence diagram of the communication system in the second exemplary embodiment; and
FIG. 6 is a graph explaining a relationship between a battery remaining amount and a battery life in the second exemplary embodiment.

### DETAILED DESCRIPTION

Exemplary embodiments will be hereinafter described in detail with reference to the drawings. However, excessively detailed description may be omitted in some cases. For example, detailed descriptions of already well-known matters, or duplicated descriptions of substantially identical configurations may be omitted.

Note that the accompanying drawings and the following description are only presented to help those skilled in the art fully understand the present disclosure, and are not intended to limit the subject matters as claimed in the claims.

### (First exemplary embodiment)

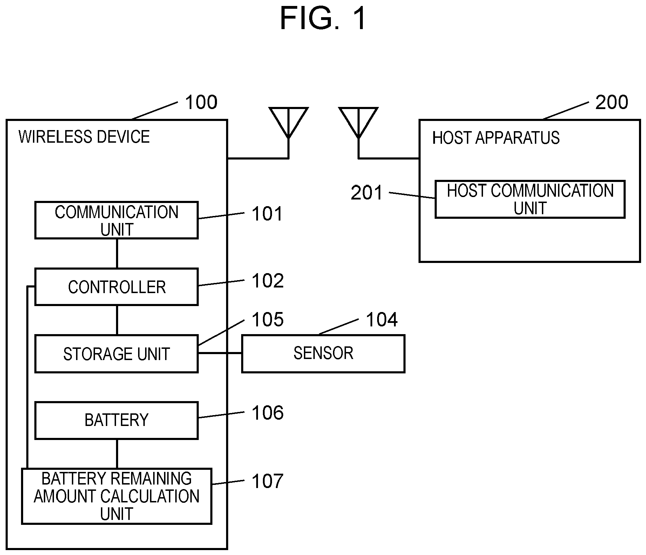

A first exemplary embodiment of the present disclosure will be hereinafter described with reference to FIGS. 1, 2, and 3. FIG. 1 is a block diagram showing a wireless device of the present disclosure, and a host apparatus that communicates with the wireless device.

Wireless device 100 includes communication unit 101, controller 102, storage unit 105, battery 106, and battery remaining amount calculation unit 107.

Communication unit 101 is controlled based on a communication protocol retained in controller 102, and configured to perform wireless communication with host apparatus 200, transmit data and the like recorded in storage unit 105 to host apparatus 200, and receive instructions and the like from host apparatus 200. In addition, communication unit 101 is constituted by respective circuits used for setting a transmission output, selecting a channel for transmission, setting a transfer rate for transmission, performing modulation, and others during wireless communication.

Controller 102 retains information for controlling communication unit 101. The information for controlling communication unit 101 herein is a communication protocol between wireless device 100 and host apparatus 200. For example, for a transition of communication, wireless device 100 is activated into a transmission allowable state at determined timing, and data or the like obtained by sensor 104 and stored in storage unit 105 is transmitted from wireless device 100 via communication unit 101. Thereafter, a procedure for shifting communication unit 101 to a reception state is performed to receive a response from host apparatus 200. In addition, a program and the like for controlling an overall operation of wireless device 100 are retained.

Controller 102 further has a function of changing communication specifications in accordance with a battery remaining amount. (Details will be described below.)

Storage unit 105 stores data obtained from sensor 104 provided outside and connected to wireless device 100. For example, sensor 104 is a flowmeter such as a gas meter and a water meter, and outputs an integrated value of flow rates or an instantaneous flow rate.

Battery 106 holds electric power to be supplied to each block within wireless device 100. An initial battery capacity is set to a capacity sufficient for maintaining functions of wireless device 100 for a demanded period in a standard use state. Battery remaining amount calculation unit 107 integrates current consumed by communication unit 101 and current consumed by other circuits to obtain total current consumption, and subtracts the total current consumption from an initial value of the battery capacity determined for the battery used to calculate a battery remaining amount at a calculation time. The current consumed by communication unit 101 is obtained by multiplying current estimated in one transmission by an actual number of times of transmission. The current consumption of other circuits is obtained for each operation state by multiplying current estimated in accordance with the corresponding operating state of the circuits by an actual operating time in the corresponding operating state. The respective values of current consumption thus obtained are added to calculate the total current consumption.

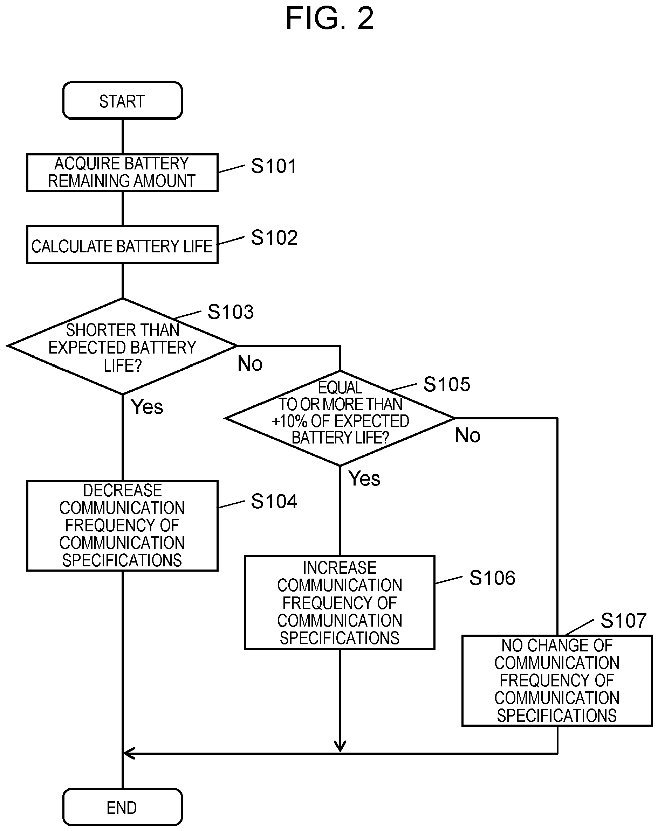

A flow for determining a communication frequency of controller 102 of wireless device 100 will be subsequently described with reference to a flowchart for explaining an operation of wireless device 100 shown in FIG. 2.

Controller 102 acquires a battery remaining amount calculated by battery remaining amount calculation unit 107 (step S101), and calculates a battery life from the acquired battery remaining amount and a current consumption condition at present (step S102).

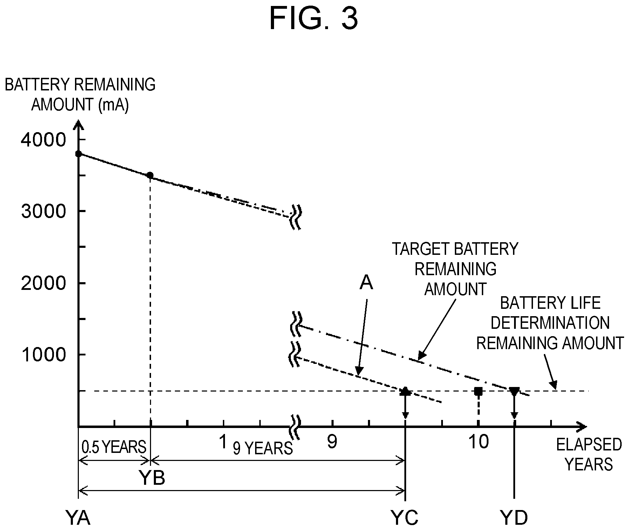

FIG. 3 is an example of a graph showing a relationship between a battery life and a battery remaining amount starting from an installation time (YA). FIG. 3 shows a result of calculation that an estimated battery life is 9.5 years (YC). This result is obtained by estimating a following transition (dotted line A) of the battery remaining amount based on a battery remaining amount calculated after an elapse of 0.5 years (YB) from the installation time (YA) and current consumption up to the time of calculation of the battery remaining amount, comparing the estimated transition of the battery remaining amount with a predetermined battery life determination remaining amount, and calculating remaining usable years (9 years in the present exemplary embodiment). Note that the estimated battery life refers to a period from installation to a time when wireless device 100 stops functioning.

Therefore, assuming that the battery life required for wireless device 100 (hereinafter referred to as expected battery life) is 10 years, the expected battery life is difficult to complete if this current consumption state continues.

Normally, the battery capacity is set to a capacity sufficient for completing the expected battery life. However, when the battery is installed in a worse communication environment than expected, the battery life becomes shorter than the expected battery life. On the contrary, when the battery is installed in a better communication environment than expected, the battery life becomes longer than the expected battery life.

Therefore, when the estimated battery life is determined to be shorter than the expected battery life, controller 102 changes communication specifications and sets 10.25 years (YD in FIG. 3), for example, as a target of the battery life to reduce current consumption associated with communication that consumes large current. When the estimated battery life is determined to be longer than the expected battery life, responsiveness may be raised by increasing the communication frequency.

More specifically, when the estimated battery life is shorter than the expected battery life (Yes in step S103), controller 102 changes the communication specifications to reduce the communication frequency (step S104). When the estimated battery life is sufficiently longer than the expected battery life (for example, more than or equal to 10%) (Yes in step S105), the communication specifications are changed to increase the communication frequency (step S106). If No in step S105, the communication specifications are not changed (step S107).

Needless to say, the communication frequency sufficient for completing the expected battery life may be calculated based on the battery remaining amount, the current consumption in one communication, and the current consumption of other circuits.

Furthermore, according to the present exemplary embodiment, the communication specifications are changed to increase the communication frequency when the estimated battery life is sufficiently longer than the expected battery life. However, the communication frequency is not necessarily required to be increased in this case.

According to wireless device 100 of the present exemplary embodiment, completion of the expected battery life is achievable by the above method.

Moreover, while the communication frequency is changed in accordance with the battery life calculated based on the battery remaining amount obtained after the elapse of 0.5 years from the installation time (YA) in the present exemplary embodiment, the timing for calculating the battery remaining amount may be set to any timing. Furthermore, according to the method described above as the method of calculating the battery life, the battery life is calculated from the current consumption at the timing of calculation of the battery remaining amount. However, the battery life may be calculated based on a function obtained by a least square method or the like from a predetermined number of values of battery remaining amounts calculated regularly from installation.

In addition, by regularly changing the communication frequency based on the battery remaining amount, the expected battery life can be completed even if the current consumption changes in accordance with a change of the communication status. Alternatively, the communication frequency may be changed on an occasion of a change of the communication specifications made in accordance with a change of the communication status. Particularly in the case of cellular communication, a number of times of retransmission in one communication is set to a fixed value in accordance with a communication level determined for the communication status, and is changed in accordance with the communication status. Accordingly, the communication frequency is preferably changed on an occasion of a change of the number of times of retransmission.

According to the present exemplary embodiment, battery remaining amount calculation unit 107 obtains the battery remaining amount based on the transmission current and the current consumption of the respective circuits. However, after a battery voltage is measured, the battery remaining amount may be obtained from a relationship between a battery voltage drop estimated in advance and the current consumption.

While the communication frequency is changed in the method described in the present exemplary embodiment, the current consumption may be adjusted by changing a data volume in one communication.

More specifically, the method of changing the communication frequency is effective when influences of power consumption imposed on the data volume are small in a high-speed communication allowable state. However, when influences of power consumption imposed on the data volume are large in a low-speed communication state, a method of changing the data volume transmitted in one communication is also adoptable.

As described above, according to the present exemplary embodiment, the communication frequency and the data volume to be transmitted are changed in accordance with the battery remaining amount of the battery as the power source of the wireless device to adjust the current consumption. In this manner, operation capable of completing the expected battery life is achievable even in the case of use of cellular communication.

### (Second exemplary embodiment)

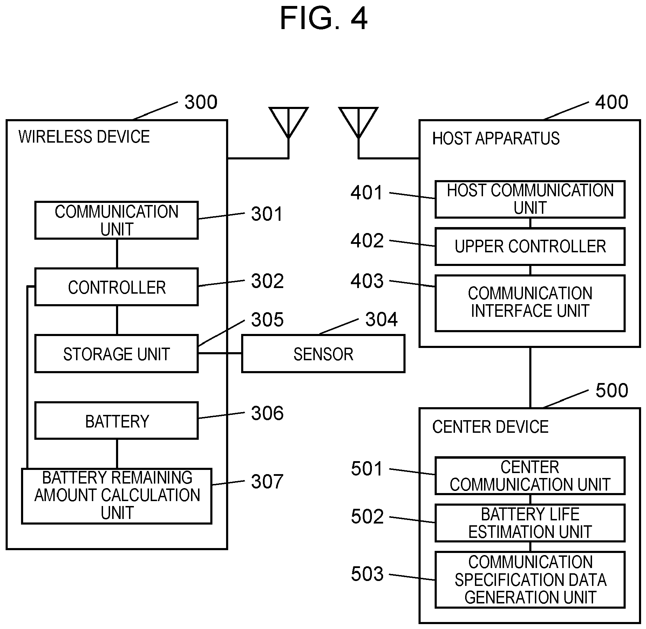

A second exemplary embodiment of the present disclosure will be subsequently described with reference to FIGS. 4, 5, and 6. FIG. 4 is a block diagram showing a communication system of the present disclosure. This communication system includes a wireless device, a host apparatus that communicates with the wireless device, and a center device that communicates with the host apparatus.

Wireless device 300 includes communication unit 301, controller 302, storage unit 305, battery 306, and battery remaining amount calculation unit 307.

Communication unit 301 is controlled based on a communication protocol retained in controller 302, and configured to perform wireless communication with host apparatus 400, transmit data and the like recorded in storage unit 305 to host apparatus 400, and receive instructions and the like from host apparatus 400. In addition, communication unit 301 is constituted by respective circuits used for setting a transmission output, selecting a channel for transmission, setting a transfer rate for transmission, performing modulation, and others during wireless communication.

Controller 302 retains information for controlling communication unit 301. The information for controlling communication unit 301 herein is a communication protocol between wireless device 300 and host apparatus 400. For example, for a transition of communication, wireless device 300 is activated into a transmission allowable state at determined timing, and data or the like obtained by sensor 304 and stored in storage unit 305 is transmitted from wireless device 300 via communication unit 301. Thereafter, a procedure for shifting communication unit 301 to a reception state is performed to receive a response from host apparatus 400. In addition, a program and the like for controlling an overall operation of wireless device 300 are retained.

Storage unit 305 stores data obtained from sensor 304 provided outside and connected to wireless device 300. For example, sensor 304 is a flowmeter such as a gas meter and a water meter, and outputs an integrated value of flow rates or an instantaneous flow rate.

Battery 306 holds electric power to be supplied to each block within wireless device 300. An initial battery capacity is set to a capacity sufficient for maintaining functions of wireless device 300 for a demanded period in a standard use state.

Battery remaining amount calculation unit 307 integrates current consumed by communication unit 301 and current consumed by other circuits to obtain total current consumption, and subtracts the total current consumption from an initial value of the battery capacity determined for battery 306 used to calculate a battery remaining amount at a calculation time. The current consumed by communication unit 301 is obtained by multiplying current estimated in one transmission by an actual number of times of transmission. The current consumption of other circuits is obtained for each operation state by multiplying current estimated in accordance with the corresponding operating state of the circuits by an actual operating time in the corresponding operating state. The respective values of current consumption thus obtained are added to calculate the total current consumption.

Host apparatus 400 includes host communication unit 401 that wirelessly communicates with wireless device 300, communication interface 403 that communicates with center device 500 via a network line or the like, and host controller 402 that controls host communication unit 401 and communication interface 403 to transmit data obtained by sensor 304 of wireless device 300 and other data to center device 500 and change communication specifications in accordance with a communication status with wireless device 300, or controls an overall operation of host apparatus 400.

Center device 500 includes center communication unit 501 that communicates with communication interface 403 of host apparatus 400, battery life estimation unit 502 that calculates an estimated battery life of wireless device 300 based on a battery remaining amount of wireless device 300 as an amount acquired via host apparatus 400, and communication specification data generation unit 503 that generates communication specifications for changing communication specifications of wireless device 300 in accordance with the estimated battery life.

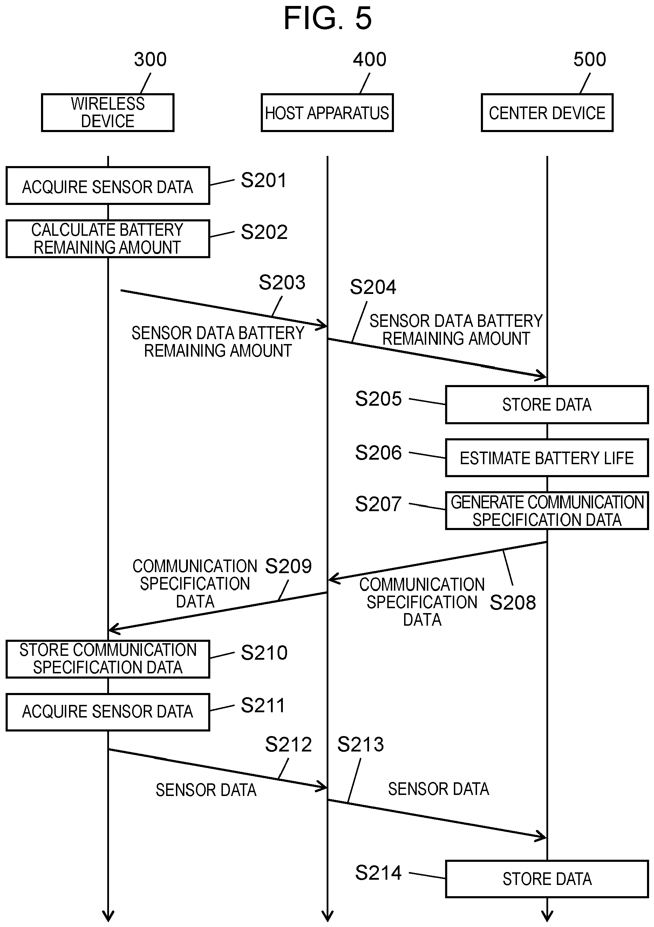

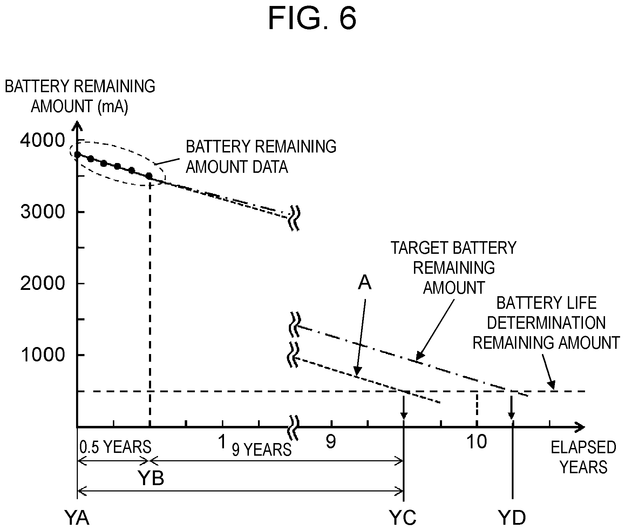

A method performed by communication specification data generation unit 503 for changing the communication specifications will be subsequently described with reference to FIGS. 5 and 6.

FIG. 5 shows a communication sequence performed between wireless device 300, host apparatus 400, and center device 500 according to the present exemplary embodiment.

Wireless device 300 herein acquires data (sensor data) obtained by sensor 304 (step S201), calculates a battery remaining amount of battery 306 (step S202), and then transmits the battery remaining amount to host apparatus 400 as data together with the data obtained by sensor 304 (step S203). Host apparatus 400 transmits the data received from wireless device 300 to center device 500 without change (step S204).

Center device 500 receives the data (sensor data) obtained by sensor 304 and the battery remaining amount as data, stores the received data in a storage device (not shown) (step S205). Battery life estimation unit 502 calculates an estimated battery life of wireless device 300 based on the battery remaining amount obtained by the reception (step S206). Subsequently, communication specification data generation unit 503 generates communication specification data for changing the communication specifications based on the estimated battery life to specifications sufficient for completing the expected battery life of wireless device 300 (step S207).

FIG. 6 is an example of a graph showing a relationship between a battery life and a battery remaining amount starting from an installation time (YA). FIG. 6 shows a result of calculation that an estimated battery life is 9.5 years (YC). This result is obtained by estimating a transition (dotted line A) of the battery remaining amount after 0.5 years based on a linear function obtained by a least squares method as a relationship between elapsed years and a battery remaining amount using a plurality of pieces of data regularly obtained in a period from the installation time (YA) to a time after an elapse of 0.5 years (YB), comparing the estimated transition of the battery remaining amount with a predetermined battery life determination remaining amount, and calculating remaining usable years (9 years in the present exemplary embodiment).

Therefore, assuming that the battery life demanded for wireless device 300 (hereinafter referred to as expected battery life) is a period of 10 years, the expected battery life is difficult to complete if this current consumption state continues.

Normally, the battery capacity is set to a capacity sufficient for completing the expected battery life. However, when the battery is installed in a worse communication environment than expected, the battery life may become shorter or longer than the expected battery life depending on the communication status.

Therefore, communication specification data generation unit 503 generates new communication data for changing the communication frequency and the data volume transmitted in one communication and adjusting the battery remaining amount to the target battery remaining amount shown in FIG. 6 by changing the communication specifications to reduce current consumption particularly associated with communication that consumes large current (step S207), and transmits the generated communication specification data to host apparatus 400 (step S208).

Thereafter, host apparatus 400 transmits the new communication specification data to wireless device 300 (step S209). Wireless device 300 stores the received new communication specification data (step S210). Subsequently, data obtained by sensor 304 (sensor data) is acquired (step S211), and the sensor data is transmitted to host apparatus 400 under communication specifications based on the new communication specification data (step S212). Host apparatus 400 transmits the sensor data to center device 500 (step S213). Center device 500 having received the sensor data stores the sensor data in a storage device (not shown) (step S214).

The communication frequency or the data volume of the communication specification data generated by communication specification data generation unit 503 is reduced when the estimated battery life is shorter than the expected battery life. When the estimated battery life is sufficiently longer than the expected battery life (for example, more than or equal to 10%), the communication specifications may be changed to increase the communication frequency or the data volume similarly to the first exemplary embodiment. In addition, when the estimated battery life is determined to be sufficient for completing the expected battery life, the communication specifications are not changed.

Needless to say, the communication frequency and the communication volume sufficient for completing the expected battery life can be obtained by calculation based on the battery remaining amount, the current consumption in one communication, and the current consumption of other circuits.

According to the communication system of the present exemplary embodiment, completion of the expected battery life is achievable by the above method. Moreover, center device 500 calculates the estimated battery life. Accordingly, a calculation load associated with battery life estimation and imposed on wireless device 300 can be reduced, and the battery remaining amount of wireless device 300 can be managed by center device 500.

In addition, by regularly changing the communication specifications based on the battery remaining amount, the expected battery life can be completed even if the current consumption changes in accordance with a change of the communication status. Alternatively, the communication frequency may be changed on an occasion of a change of the communication specifications made in accordance with a change of the communication status. Particularly in the case of cellular communication, a number of times of retransmission in one communication is set to a fixed value in accordance with a communication level determined for the communication status, and is changed in accordance with the communication status. Accordingly, the communication frequency is preferably changed on an occasion of a change of the number of times of retransmission.

According to the present exemplary embodiment, battery remaining amount calculation unit 307 calculates the battery remaining amount by calculation based on the consumed current. However, wireless device 300 may measure a battery voltage and transmit the battery voltage to center device 500 as the battery remaining amount. In this case, battery life estimation unit 502 may calculate the battery remaining amount based on the battery voltage obtained by the reception.

Moreover, the battery remaining amount may be calculated not by wireless device 300 but by center device 500 which calculates the battery remaining amount of the battery by estimating the number of times of communication and the operation status of wireless device 300.

While data of the battery remaining amount is sent to host apparatus 400 together with measurement data according to the above description, the data may be separately sent at different timing.

According to the present exemplary embodiment described above, the communication frequency and the data volume are changed in accordance with the battery remaining amount of the battery as the power source of the wireless device to adjust the current consumption. In this manner, operation capable of completing the expected battery life is achievable even when cellular communication is used.

As described above, a wireless device according to a first disclosure includes: a communication unit that communicates with a host apparatus; a controller that controls the communication unit; a storage unit that records data obtained from an external device; a battery that is a power source; and a battery remaining amount calculation unit that calculates a battery remaining amount of the battery based on a communication status with the host apparatus. Furthermore, the controller of the wireless device changes at least one fo (i) a frequency of transmission of the data to the host apparatus via the communication unit and (ii) a volume of the data transmitted to the host apparatus via the communication unit in accordance with the battery remaining amount calculated by the battery remaining amount calculation unit.

In this configuration, the wireless device according to the first disclosure changes the communication frequency and the volume of data for communication in accordance with the battery remaining amount of the battery that is the power source of the wireless device to reduce current consumption. Accordingly, even in a case of use of cellular communication, current consumption can be reduced, and operation can be achieved for a demanded period without battery replacement.

According to a second disclosure, particularly in the wireless device of the first disclosure, the controller may increase the frequency of transmission of the data to the host apparatus via the communication unit when the battery remaining amount is determined to be larger than a battery remaining amount estimated beforehand.

According to a third disclosure, particularly in the wireless device of the first disclosure, the controller may decrease the frequency of transmission of the data to the host apparatus via the communication unit when the battery remaining amount is determined to be smaller than a battery remaining amount estimated beforehand.

According to a fourth disclosure, particularly in the wireless device of the first disclosure, the controller may transmit a larger volume of data to the host apparatus via the communication unit than a volume of data determined beforehand when the battery remaining amount is determined to be larger than a battery remaining amount estimated beforehand.

According to a fifth disclosure, particularly in the wireless device of the first disclosure, the controller may transmit a smaller volume of data to the host apparatus via the communication unit than a volume of data determined beforehand when the battery remaining amount is determined to be smaller than a battery remaining amount estimated beforehand.

A communication system of a sixth disclosure includes a wireless device that includes a storage unit that stores data from an external device and communication specifications defining communication with a host apparatus, a communication unit that communicates with the host apparatus, a battery that is a power source, a battery remaining amount calculation unit that calculates a battery remaining amount of the battery based on a communication status with the host apparatus, and a controller that controls the communication unit in accordance with the communication specifications stored in the storage unit. The communication system further includes the host apparatus that includes a host communication unit that communicates with the wireless device, and a communication interface unit that communicates with a center device. The communication system further includes the center device that includes a center communication unit that communicates with the host apparatus, and a communication specification data generation unit. The center device of the communication system generates communication specification data for changing the communication specifications of the wireless device using the communication specification data generation unit based on the battery remaining amount obtained from the wireless device.

In this configuration, the communication system according to the sixth disclosure changes the communication frequency and the volume of data for communication in accordance with the battery remaining amount of the battery that is the power source of the wireless device to reduce current consumption. Accordingly, even in a case of use of cellular communication, current consumption can be reduced, and operation can be achieved for a demanded period without battery replacement.

According to a seventh disclosure, particularly in the communication system of the sixth disclosure, when the battery remaining amount is larger than a battery remaining amount estimated beforehand, the center device may generate, using the communication specification data generation unit, the communication specification data set so as to increase a frequency of communication of the wireless device, and transmit the communication specification data to the wireless device via the host apparatus.

According to an eighth disclosure, particularly in the communication system of the sixth disclosure, when the battery remaining amount is smaller than a battery remaining amount estimated beforehand, the center device may generate, using the communication specification data generation unit, the communication specification data set so as to decrease a frequency of communication of the wireless device, and transmit the communication specification data to the wireless device via the host apparatus.

According to a ninth disclosure, particularly in the communication system of the sixth disclosure, when the battery remaining amount is larger than a battery remaining amount estimated beforehand, the center device may generate, using the communication specification data generation unit, the communication specification data set so as to increase a volume of the data transmitted from the wireless device, and transmit the communication specification data to the wireless device via the host apparatus.

According to a tenth disclosure, particularly in the communication system of the sixth disclosure, when the battery remaining amount is smaller than a battery remaining amount estimated beforehand, the center device may generate, using the communication specification data generation unit, the communication specification data set so as to decrease a volume of the data transmitted from the wireless device, and transmit the communication specification data to the wireless device via the host apparatus.

As described above, the wireless device according to the present disclosure changes the communication frequency and the volume of data for communication in accordance with the battery remaining amount of the battery that is the power source to reduce current consumption. In this manner, battery driving for demanded years of use is allowed to be completed, and therefore operation with reduction of power consumption is achievable even in a case of use of cellular communication.

## Claims

1. A wireless device (100) comprising:
a communication unit (101) configured to communicate with a host apparatus (200);
a controller (102) configured to control the communication unit;
a storage unit (105) configured to record data obtained from an external device;
a battery (106) that is a power source; and
a battery remaining amount calculation unit (107) configured to calculate a battery remaining amount of the battery based on a communication status with the host apparatus (200),
**characterized in that**
the battery remaining amount calculation unit (107) is configured to obtain an estimated battery life by
estimating a transition of the battery remaining amount based on the battery remaining amount calculated after an elapse of a predetermined period from the installation time and current consumption up to the time of calculation of the battery remaining amount,
comparing the estimated transition of the battery remaining amount with a predetermined battery life determination remaining amount, and calculating remaining usable years, and
adding the remaining usable years to the predetermined period,
the controller (102) is configured to determine whether the estimated battery life calculated by the battery remaining amount calculation unit (107) is shorter or sufficiently longer than an expected battery life of the wireless device (100), and the controller (102) is configured to change at least one of (i) a frequency of transmission of the data to the host apparatus via the communication unit and (ii) a volume of the data transmitted to the host apparatus (200) via the communication unit (101) in accordance with the battery remaining amount calculated by the battery remaining amount calculation unit (107).

2. The wireless device according to claim 1, wherein the controller increases the frequency of transmission of the data to the host apparatus via the communication unit when the battery remaining amount is determined to be larger than a battery remaining amount estimated beforehand.

3. The wireless device according to claim 1, wherein the controller decreases the frequency of transmission of the data to the host apparatus via the communication unit when the battery remaining amount is determined to be smaller than a battery remaining amount estimated beforehand.

4. The wireless device according to claim 1, wherein the controller transmits a larger volume of data to the host apparatus via the communication unit than a volume of data determined beforehand when the battery remaining amount is determined to be larger than a battery remaining amount estimated beforehand.

5. The wireless device according to claim 1, wherein the controller transmits a smaller volume of data to the host apparatus via the communication unit than a volume of data determined beforehand when the battery remaining amount is determined to be smaller than a battery remaining amount estimated beforehand.

6. A communication system comprising:
the wireless device (300) according to any one of the preceding claims that includes a storage unit (305) configured to store data from an external device and communication specifications defining communication with a host apparatus, a communication unit (301) configured to communicate with the host apparatus, a battery (306) that is a power source, a battery remaining amount calculation unit (307) configured to calculate a battery remaining amount of the battery based on a communication status with the host apparatus (400), and a controller (302) configured to control the communication unit (301) in accordance with the communication specifications stored in the storage unit (305);
the host apparatus (400) that includes a host communication unit (401) configured to communicate with the wireless device (300), and a communication interface unit (403) configured to communicate with a center device (500); and
the center device (500) that includes a center communication unit (501) configured to communicate with the host apparatus (400), battery life estimation unit (502), and a communication specification data generation unit (503),
**characterized in that**
the battery life estimation unit (502) is configured to obtain an estimated battery life by
estimating a transition of the battery remaining amount based on the battery remaining amount calculated after an elapse of a predetermined period from the installation time and current consumption up to the time of calculation of the battery remaining amount,
comparing the estimated transition of the battery remaining amount with a predetermined battery life determination remaining amount, and calculating remaining usable years, and
adding the remaining usable years to the predetermined period,
the communication specification data generation unit (503) is configured to create communication specification data for changing the communication specifications so as to satisfy an expected battery life of the wireless device (300) based on the estimated battery life, and the center device (500) is configured to transmit the communication specification data to the wireless device (300) via the host apparatus (400),
the wireless device (300) is configured to change at least one of (i) a frequency of transmission of the data to the host apparatus (400) via the communication unit (301) and (ii) a volume of the data transmitted to the host apparatus (400) via the communication unit (301) when the estimated battery life is shorter or sufficiently longer than the expected battery life of the wireless device (300) in the communication specification data.

7. The communication system according to claim 6, wherein, when the battery remaining amount is larger than a battery remaining amount estimated beforehand, the center device generates, using the communication specification data generation unit, the communication specification data set so as to increase a frequency of communication of the wireless device, and transmits the communication specification data to the wireless device via the host apparatus.

8. The communication system according to claim 6, wherein, when the battery remaining amount is smaller than a battery remaining amount estimated beforehand, the center device generates, using the communication specification data generation unit, the communication specification data set so as to decrease a frequency of communication of the wireless device, and transmits the communication specification data to the wireless device via the host apparatus.

9. The communication system according to claim 6, wherein, when the battery remaining amount is larger than a battery remaining amount estimated beforehand, the center device generates, using the communication specification data generation unit, the communication specification data set so as to increase a volume of the data transmitted from the wireless device, and transmits the communication specification data to the wireless device via the host apparatus.

10. The communication system according to claim 6, wherein, when the battery remaining amount is smaller than a battery remaining amount estimated beforehand, the center device generates, using the communication specification data generation unit, the communication specification data set so as to decrease a volume of the data transmitted from the wireless device, and transmits the communication specification data to the wireless device via the host apparatus.

## Patentansprüche

1. Drahtloses Gerät (100), umfassend:
eine Kommunikationseinheit (101), die zur Kommunikation mit einem Host-Gerät (200) konfiguriert ist;
ein Steuergerät (102), das zur Steuerung der Kommunikationseinheit konfiguriert ist;
eine Speichereinheit (105), die so konfiguriert ist, dass sie von einer externen Vorrichtung erhaltene Daten aufzeichnet;
eine Batterie (106), die eine Energiequelle darstellt; und
eine Batterierestmengenberechnungseinheit (107), die so konfiguriert ist, dass sie eine Batterierestmenge der Batterie basierend auf einem Kommunikationsstatus mit dem Hostgerät (200) berechnet,
**dadurch gekennzeichnet, dass**
die Einheit (107) zur Berechnung der verbleibenden Batterielebensdauer so konfiguriert ist, dass sie eine geschätzte Batterielebensdauer erhält, indem sie
einen Übergang der Batterierestmenge auf der Grundlage der Batterierestmenge abschätzt, die nach Ablauf einer vorbestimmten Zeitspanne von der Installationszeit und dem Stromverbrauch bis zum Zeitpunkt der Berechnung der Batterierestmenge berechnet wird,
den geschätzten Übergang der Batterierestmenge mit einer vorbestimmten Batterielebensdauer-Bestimmungsrestmenge vergleicht und die verbleibenden nutzbaren Jahre berechnet, und
die verbleibenden nutzbaren Jahre zu dem vorher festgelegten Zeitraum hinzufügt,
die Steuereinheit (102) konfiguriert ist, um zu bestimmen, ob die geschätzte Batterielebensdauer, die durch die Batterierestmengen-Berechnungseinheit (107) berechnet wird, kürzer oder ausreichend länger als eine erwartete Batterielebensdauer der drahtlosen Vorrichtung (100) ist, und die Steuereinheit (102) konfiguriert ist, um zumindest eines von (i) einer Frequenz der Übertragung der Daten an die Host-Vorrichtung über die Kommunikationseinheit und (ii) einem Volumen der Daten, die an die Host-Vorrichtung (200) über die Kommunikationseinheit (101) übertragen werden, in Übereinstimmung mit der Batterierestmenge, die durch die Batterierestmengen-Berechnungseinheit (107) berechnet wird, zu ändern.

2. Drahtloses Gerät nach Anspruch 1, bei dem das Steuergerät die Häufigkeit der Übertragung der Daten an das Host-Gerät über die Kommunikationseinheit erhöht, wenn festgestellt wird, dass die verbleibende Batterieleistung größer ist als eine zuvor geschätzte Batterieleistung.

3. Drahtloses Gerät nach Anspruch 1, bei dem das Steuergerät die Häufigkeit der Übertragung der Daten an das Host-Gerät über die Kommunikationseinheit verringert, wenn festgestellt wird, dass die verbleibende Batterieleistung geringer ist als eine zuvor geschätzte Batterieleistung.

4. Drahtloses Gerät nach Anspruch 1, bei dem das Steuergerät über die Kommunikationseinheit eine größere Datenmenge an das Host-Gerät überträgt als eine zuvor ermittelte Datenmenge, wenn festgestellt wird, dass die Batterie-Restmenge größer ist als eine zuvor geschätzte Batterie-Restmenge.

5. Drahtloses Gerät nach Anspruch 1, bei dem das Steuergerät über die Kommunikationseinheit eine kleinere Datenmenge an das Host-Gerät überträgt als eine zuvor ermittelte Datenmenge, wenn festgestellt wird, dass die verbleibende Batteriemenge kleiner ist als eine zuvor geschätzte verbleibende Batteriemenge.

6. Kommunikationssystem, umfassend:
das drahtlose Gerät (300) nach einem der vorhergehenden Ansprüche, das eine Speichereinheit (305), die zum Speichern von Daten von einem externen Gerät konfiguriert ist, und Kommunikationsspezifikationen, die die Kommunikation mit einer Host-Vorrichtung definieren, eine Kommunikationseinheit (301), die zur Kommunikation mit der Host-Vorrichtung konfiguriert ist, eine Batterie (306), die eine Energiequelle ist, enthält eine Batterierestmengenberechnungseinheit (307), die so konfiguriert ist, dass sie eine Batterierestmenge der Batterie auf der Grundlage eines Kommunikationsstatus mit dem Host-Gerät (400) berechnet, und ein Steuergerät (302), das so konfiguriert ist, dass es die Kommunikationseinheit (301) gemäß den in der Speichereinheit (305) gespeicherten Kommunikationsspezifikationen steuert;
die Host-Vorrichtung (400), die eine Host-Kommunikationseinheit (401), die so konfiguriert ist, dass sie mit der drahtlosen Vorrichtung (300) kommuniziert, und eine Kommunikationsschnittstelleneinheit (403), die so konfiguriert ist, dass sie mit einer zentralen Vorrichtung (500) kommuniziert, enthält; und
die zentrale Vorrichtung (500), die eine zentrale Kommunikationseinheit (501), die so konfiguriert ist, dass sie mit dem Host-Gerät (400) kommuniziert, eine Batterielebensdauer-Abschätzungseinheit (502) und eine Einheit (503) zur Erzeugung von Kommunikationsspezifikationsdaten umfasst,
**dadurch gekennzeichnet, dass**
die Einheit zur Schätzung der Batterielebensdauer (502) so konfiguriert ist, dass sie eine geschätzte Batterielebensdauer erhält durch
Schätzen eines Übergangs der Batterierestmenge auf der Grundlage der Batterierestmenge, die nach Ablauf eines vorbestimmten Zeitraums von der Installationszeit und dem Stromverbrauch bis zum Zeitpunkt der Berechnung der Batterierestmenge berechnet wird,
Vergleichen des geschätzten Übergangs der Batterierestmenge mit einer vorbestimmten Batterielebensdauer-Bestimmungsrestmenge und Berechnen der verbleibenden nutzbaren Jahre, und
Hinzufügen der verbleibenden nutzbaren Jahre zu dem vorher festgelegten Zeitraum,
die Kommunikationsspezifikationsdaten-Erzeugungseinheit (503) so konfiguriert ist, dass sie Kommunikationsspezifikationsdaten zum Ändern der Kommunikationsspezifikationen erzeugt, um eine erwartete Batterielebensdauer der drahtlosen Vorrichtung (300) auf der Grundlage der geschätzten Batterielebensdauer zu erfüllen, und die Zentralvorrichtung (500) so konfiguriert ist, dass sie die Kommunikationsspezifikationsdaten über die Host-Vorrichtung (400) an die drahtlose Vorrichtung (300) überträgt,
das drahtlose Gerät (300) so konfiguriert ist, dass es (i) eine Frequenz der Übertragung der Daten an das Host-Gerät (400) über die Kommunikationseinheit (301) und/oder (ii) ein Volumen der über die Kommunikationseinheit (301) an das Host-Gerät (400) übertragenen Daten ändert, wenn die geschätzte Batterielebensdauer kürzer oder ausreichend länger ist als die erwartete Batterielebensdauer des drahtlosen Geräts (300) in den Kommunikationsspezifikationsdaten.

7. Kommunikationssystem nach Anspruch 6, bei dem, wenn die Batterie-Restmenge größer ist als eine zuvor geschätzte Batterie-Restmenge, die zentrale Vorrichtung unter Verwendung der Kommunikations-Spezifikationsdaten-Erzeugungseinheit den Kommunikations-Spezifikationsdatensatz erzeugt, um eine Kommunikationsfrequenz der drahtlosen Vorrichtung zu erhöhen, und die Kommunikations-Spezifikationsdaten über die Host-Vorrichtung an die drahtlose Vorrichtung sendet.

8. Kommunikationssystem nach Anspruch 6, bei dem, wenn die Batterie-Restmenge kleiner ist als eine zuvor geschätzte Batterie-Restmenge, die zentrale Vorrichtung unter Verwendung der Kommunikations-Spezifikationsdaten-Erzeugungseinheit den Kommunikations-Spezifikationsdatensatz erzeugt, um eine Kommunikationsfrequenz der drahtlosen Vorrichtung zu verringern, und die Kommunikations-Spezifikationsdaten über die Host-Vorrichtung an die drahtlose Vorrichtung sendet.

9. Kommunikationssystem nach Anspruch 6, bei dem, wenn die Batterie-Restmenge größer ist als eine zuvor geschätzte Batterie-Restmenge, die Zentralvorrichtung unter Verwendung der Kommunikations-Spezifikationsdaten-Erzeugungseinheit den Kommunikations-Spezifikationsdatensatz erzeugt, um ein Volumen der von der drahtlosen Vorrichtung übertragenen Daten zu erhöhen, und die Kommunikations-Spezifikationsdaten über die Host-Vorrichtung an die drahtlose Vorrichtung überträgt.

10. Kommunikationssystem nach Anspruch 6, bei dem, wenn die Batterierestmenge kleiner ist als eine zuvor geschätzte Batterierestmenge, die Zentralvorrichtung unter Verwendung der Einheit zur Erzeugung von Kommunikationsspezifikationsdaten den Kommunikationsspezifikationsdatensatz erzeugt, um ein Volumen der von der drahtlosen Vorrichtung übertragenen Daten zu verringern, und die Kommunikationsspezifikationsdaten über die Hostvorrichtung an die drahtlose Vorrichtung überträgt.

## Revendications

1. Dispositif sans fil (100) comprenant :
une unité de communication (101) configurée pour communiquer avec un appareil hôte (200) ;
un contrôleur (102) configuré pour contrôler l'unité de communication ;
une unité de stockage (105) configurée pour enregistrer des données obtenues à partir d'un dispositif externe ;
une batterie (106) qui est une source d'alimentation ; et
une unité de calcul de quantité restante de batterie (107) configurée pour calculer une quantité restante de batterie de la batterie sur la base d'un état de communication avec l'appareil hôte (200),
**caractérisé en ce que**
l'unité de calcul de quantité restante de batterie (107) est configurée pour obtenir une durée de vie estimée de la batterie en
estimant une transition de la quantité restante de batterie sur la base de la quantité restante de batterie calculée après l'écoulement d'une période prédéterminée depuis le temps d'installation et la consommation actuelle jusqu'au moment du calcul de la quantité restante de batterie,
comparant la transition estimée de la quantité restante de batterie avec une quantité restante de détermination de durée de vie de batterie prédéterminée, et calculant les années d'utilisation restantes, et
ajoutant les années utilisables restantes à la période prédéterminée,
le contrôleur (102) est configuré pour déterminer si la durée de vie estimée de la batterie calculée par l'unité de calcul de quantité restante de batterie (107) est plus courte ou suffisamment plus longue qu'une durée de vie attendue de la batterie du dispositif sans fil (100), et le contrôleur (102) est configuré pour modifier au moins l'un parmi (i) une fréquence de transmission des données à l'appareil hôte via l'unité de communication et (ii) un volume de données transmises à l'appareil hôte (200) via l'unité de communication (101) en fonction de la quantité restante de batterie calculée par l'unité de calcul de quantité restante de batterie (107).

2. Dispositif sans fil selon la revendication 1, dans lequel le contrôleur augmente la fréquence de transmission des données à l'appareil hôte via l'unité de communication lorsqu'il est déterminé que la quantité restante de batterie est supérieure à une quantité restante de batterie estimée au préalable.

3. Dispositif sans fil selon la revendication 1, dans lequel le contrôleur diminue la fréquence de transmission des données à l'appareil hôte via l'unité de communication lorsque la quantité restante de batterie est déterminée comme étant inférieure à une quantité restante de batterie estimée au préalable.

4. Dispositif sans fil selon la revendication 1, dans lequel le contrôleur transmet à l'appareil hôte via l'unité de communication un volume de données supérieur à un volume de données déterminé au préalable lorsque la quantité restante de batterie est déterminée comme étant supérieure à une quantité restante de batterie estimée au préalable.

5. Dispositif sans fil selon la revendication 1, dans lequel le contrôleur transmet à l'appareil hôte via l'unité de communication un volume de données inférieur à un volume de données déterminé au préalable lorsque la quantité restante de batterie est déterminée comme étant inférieure à une quantité restante de batterie estimée au préalable.

6. Système de communication comprenant :
le dispositif sans fil (300) selon l'une quelconque des revendications précédentes qui comprend une unité de stockage (305) configurée pour stocker des données provenant d'un dispositif externe et des spécifications de communication définissant la communication avec un appareil hôte, une unité de communication (301) configurée pour communiquer avec l'appareil hôte, une batterie (306) qui est une source d'alimentation, une unité de calcul de quantité restante de batterie (307) configurée pour calculer une quantité restante de batterie de la batterie sur la base d'un état de communication avec l'appareil hôte (400), et un contrôleur (302) configuré pour contrôler l'unité de communication (301) conformément aux spécifications de communication stockées dans l'unité de stockage (305) ;.
l'appareil hôte (400) qui comprend une unité de communication hôte (401) configurée pour communiquer avec le dispositif sans fil (300), et une unité d'interface de communication (403) configurée pour communiquer avec un dispositif central (500) ; et
le dispositif central (500) qui comprend une unité de communication centrale (501) configurée pour communiquer avec l'appareil hôte (400), une unité d'estimation de durée de vie de batterie (502) et une unité de génération de données de spécification de communication (503), **caractérisé en ce que**
l'unité d'estimation de durée de vie de batterie (502) est configurée pour obtenir une durée de vie estimée de la batterie en
estimant une transition de la quantité restante de batterie sur la base de la quantité restante de batterie calculée après l'écoulement d'une période prédéterminée depuis le temps d'installation et la consommation actuelle jusqu'au moment du calcul de la quantité restante de batterie,
comparant la transition estimée de la quantité restante de batterie avec une quantité restante de détermination de durée de vie de batterie prédéterminée, et calculant les années d'utilisation restantes, et
en ajoutant les années d'utilisation restantes à la période prédéterminée, l'unité de génération de données de spécification de communication (503) est configurée pour créer des données de spécification de communication pour modifier les spécifications de communication de manière à satisfaire une durée de vie attendue de la batterie du dispositif sans fil (300) sur la base de l'estimation de la durée de vie de la batterie, et le dispositif central (500) est configuré pour transmettre les données de spécification de communication au dispositif sans fil (S00) via l'appareil hôte (400),
le dispositif sans fil (300) est configuré pour modifier au moins l'un parmi (i) une fréquence de transmission des données à l'appareil hôte (400) via l'unité de communication (301) et (ii) un volume des données transmises à l'appareil hôte (400) via l'unité de communication (301) lorsque la durée de vie estimée de la batterie est plus courte ou suffisamment plus longue que la durée de vie attendue de la batterie du dispositif sans fil (300) dans les données de spécification de communication.

7. Système de communication selon la revendication 6, dans lequel, lorsque la quantité restante de batterie est supérieure à une quantité restante de batterie estimée au préalable, le dispositif central génère, en utilisant l'unité de génération de données de spécification de communication, l'ensemble de données de spécification de communication de manière à augmenter une fréquence de communication du dispositif sans fil, et transmet les données de spécification de communication au dispositif sans fil via l' appareil hôte.

8. Système de communication selon la revendication 6, dans lequel, lorsque la quantité restante de batterie est inférieure à une quantité restante de batterie estimée au préalable, le dispositif central génère, en utilisant l'unité de génération de données de spécification de communication, l'ensemble de données de spécification de communication de manière à diminuer une fréquence de communication du dispositif sans fil, et transmet les données de spécification de communication au dispositif sans fil via l'appareil hôte.

9. Système de communication selon la revendication 6, dans lequel, lorsque la quantité restante de batterie est supérieure à une quantité restante de batterie estimée au préalable, le dispositif central génère, en utilisant l'unité de génération de données de spécification de communication, l'ensemble de données de spécification de communication de manière à augmenter un volume des données transmises depuis le dispositif sans fil, et transmet les données de spécification de communication au dispositif sans fil via l'appareil hôte.

10. Système de communication selon la revendication 6, dans lequel, lorsque la quantité restante de batterie est inférieure à une quantité restante de batterie estimée au préalable, le dispositif central génère, en utilisant l'unité de génération de données de spécification de communication, l'ensemble de données de spécification de communication de manière à diminuer un volume des données transmises depuis le dispositif sans fil, et transmet les données de spécification de communication au dispositif sans fil via l'appareil hôte.
